# EUROPÄISCHE PATENTSCHRIFT

(11) **EP 0 886 714 B1**
(45) Veröffentlichungstag und Bekanntmachung des Hinweises auf die Patenterteilung: **19.07.2000**
(21) Anmeldenummer: 97918014.8
(22) Anmeldetag: 11.03.1997
(51) Int. Cl.: E21B 3/02, E21B 17/05

(54) **VORRICHTUNG ZUR HERSTELLUNG EINES ERDLOCHS**
DEVICE FOR DRILLING A BORE HOLE IN THE GROUND
DISPOSITIF DE FORAGE D'UN TROU DE SONDE

(30) Priorität: 13.03.1996 DE 19609899
(43) Veröffentlichungstag der Anmeldung: 30.12.1998
(60) Teilanmeldung: 99104961.0
(73) Patentinhaber: Wirth Maschinen- und Bohrgeräte-Fabrik GmbH, 41812 Erkelenz (DE)
(72) Erfinder: TIBUSSEK, Fritz, D-41063 Mönchengladbach (DE); HEINRICHS, Peter, D-41812 Erkelenz (DE)
(74) Vertreter: Kluin, Jörg-Eden, Dr. Dipl.-Phys.
(86) Internationale Anmeldenummer: DE9700469
(87) Internationale Veröffentlichungsnummer: WO9734070

(56) Entgegenhaltungen:
- EP-A- 0 302 632
- EP-A- 0 627 543
- WO-A-89/08769
- WO-A-90/12229
- DE-A- 3 817 660
- GB-A- 2 231 601
- US-A- 2 921 805

## Beschreibung

Die Erfindung betrifft eine Vorrichtung zur Herstellung eines Erdlochs nach dem Oberbegriff des Anspruchs 1.

Derartige Vorrichtungen bzw. Maschinen sind aus dem Stand der Technik bekannt. Die Werkzeughämmer sind hierbei zu mehreren direkt mit dem Werkzeugkopf verbunden, so daß die Schlagenergie über das Antriebsmedium auf die in das Bohrloch abgetauchten Hämmer und von diesen direkt auf die Bohrlochsohle übertragen wird, so daß das Verbindungsgestänge davon weitgehend unbeeinflußt bleibt. Der Werkzeugkopf ist über das Verbindungsgestänge mit einer außerhalb des Bohrlochs angeordneten Antriebsvorrichtung wie einem Drehantrieb verbunden, so daß die an dem Werkzeugkopf angeordneten Hämmer an immer neuen Stellen der Bohrlochsohle arbeiten. In erster Linie wird mit den in Rede stehenden Vorrichtungen in massivem Gestein gearbeitet.

Für die Praxis ist diese Art des Bohrens von zunehmender Bedeutung, da einerseits die Qualität der Bohrlöcher besser ist und die Richtung der Bohrlöcher nahezu exakt eingehalten werden kann, andererseits aufgrund der schallschluckenden Einsatzweise im Bohrloch ohne wesentliche Außenwirkung Umweltkriterien wie Lärmbelästigung deutlich besser erfüllt werden.

Der Abtransport des an der Bohrlochsohle losgehämmerten bzw. abgeschürften Gesteinsmaterials aus dem Bohrloch heraus kann bei derartigen Anlagen innerhalb des hohlen Verbindungsgestänges nach dem sogenannten Lufthebeverfahren (reverse circulation) erfolgen, bei dem eine Flüssigkeitssäule im Bohrloch steht und Luft als Spülflüssigkeit in das Bohrgestänge oberhalb des Werkzeugkopfes eingeblasen wird, so daß durch die im Verbindungsgestänge hochsteigende Luft eine Druckdifferenz in der Flüssigkeitssäule im Verbindungsgestänge zwischen Bohrloch und Oberfläche entsteht, die eine Strömungsgeschwindigkeit im Verbindungsgestänge induziert, mit der das Gesteinsmaterial durch das Verbindungsgestänge hindurch ausgetrieben wird.

Beim hämmernden Herstellen eines Erdlochs muß der für das Abtransportieren des gelösten Materials zur Verfügung stehende Innendurchmesser des Verbindungsgestänges eine gewisse Mindestgröße aufweisen, die an die hochzufördernde Gesamtmenge angepaßt ist. Auch weisen die losgeschlagenen Gesteinsbrocken im Vergleich zum reinen Drehbohren größere Dimensionen auf.

Das fluide Antriebsmedium für die am unteren Ende des Verbindungsgestänges sitzenden Bohrhämmer wird von dem entsprechenden Drehanschlußkopf am oberen Ende des Verbindungsgestänges über eine in oder an dem Verbindungsgestänge ausgebildete Zuführung den Bohrhämmern zugeführt.

Bei den wie erwähnt notwendig relativ großen Durchmessern des Verbindungsgestänges ergeben sich Probleme bei den Dichtungen des Drehanschlußkopfes.

Hydraulisch oder pneumatisch angetriebene Hämmer werden bei Drücken von etwa 50 bis 150 bar betrieben. Es zeigte sich, daß bei diesen hohen Drücken und dem große Durchmesser erfordernden Lufthebeverfahren bei den bisher an der kritischen Stelle des Übergangs zwischen dem feststehenden Drehanschlußkopf und dem sich drehenden Verbindungsgestänge eingesetzten Einfachdichtungen wirtschaftliche Standzeiten nicht zu erzielen waren.

Aus der GB-A 2 231 601 ist eine Vorrichtung zum Vortreiben einer Bohrung unter Wasser bekannt, bei der das Verbindungsgestänge drehalternierend angetrieben wird. Der Zufuhr des Spülmediums zu dem unteren Teil des Bohrgestänges dient eine den Umfang des Verbindungsgestänges im oberen Bereich umgebende Kammer, die mit Einlaßöffnungen im Verbindungsgestänge kommuniziert. Zur Abdichtung des Verbindungsbereichs der Kammer und des Verbindungsgestänges ist eine aufwendige Drehdichtungsanordnung erforderlich.

Aufgabe der Erfindung ist es, eine drehalternierend arbeitende Vorrichtung so zu verbessern, daß auf eine aufwendige Drehdichtungsanordnung verzichtet und die Vorrichtung auch unter hohen Drücken über längere reparaturfreie Zeiträume betrieben werden kann.

Diese Aufgabe wird durch die in Anspruch 1 angegebene Erfindung gelöst.

Bei der Vorrichtung gemäß Anspruch 1 dreht der Drehantriebskopf das Verbindungsgestänge alternierend um einen begrenzten Drehwinkel vorwärts und rückwärts. Den Winkel, den das Verbindungsgestänge und damit der Werkzeugkopf bei jeder Drehung überstreichen muß, ist von der Anzahl der Hämmer auf dem gleichen Radius im Werkzeugkopf abhängig. Bei zwei Hämmern auf dem gleichen Radius beispielsweise ist ein überstrichener Winkel von 180° ausreichend; es kann jedoch auch vorteilhaft sein, das Gestänge um einen größeren als den ausreichenden Winkel zu drehen.

Vorteil dieser Ausführungsform ist, daß zur Ermöglichung der Drehung des Verbindungsgestänges keine verschleißanfälligen Drehdichtungen in der Zuleitung für das unter Druck stehende Arbeitsmedium nötig sind. Der Anschluß der Zuleitung an die Zuführung kann beispielsweise durch flexible Leitungen erfolgen, deren Länge derart bemessen ist, daß sie der notwendigen Winkelüberstreichung folgen können. Durch den durch die alternierende Arbeitsweise bedingten begrenzten Drehwinkel kann die Zuleitung für das fluide Antriebsmedium fest mit der Zuführung verbunden werden. Der eigentliche Drehanschluß für das fluide Antriebsmedium mit gegeneinander sich drehenden Flächen, an denen Dichtungen wirken, kann eingespart werden.

Besonders vorteilhaft ist eine Ausgestaltung der erfindungsgemäßen Vorrichtung gemäß Anspruch 2, bei dem auch die Zuführung, die der Einleitung der Druckluft in das Innere des Verbindungsgestänges zum Heben des Abraumes dient, einen flexiblen Bereich aufweist, der die alternierende begrenzte Drehbewegung ermöglicht, da durch diese Ausgestaltung auch die sonst hierfür benötigte Drehdichtung eingespart werden kann.

In diesem Sinne besonders bevorzugt ist eine Ausgestaltung, die neben den Merkmalen der Ansprüche 1 und 2 auch diejenigen des Anspruchs 3 aufweist, da bei dieser gänzlich auf verschleißanfällige und aufwendig herzustellende Drehdurchführungen mit entsprechenden Dichtungen verzichtet werden kann.

Bei einer Ausführungsform der erfindungsgemäßen Vorrichtung gemäß Anspruch 4 sind eine oder beide Zuleitungen als flexible Schlauchleitungen ausgebildet.

Es ist gemäß Anspruch 5 aber ebenfalls möglich, die Zuleitungen über die Länge des Verbindungsgestänges starr auszubilden und an diesem festzulegen und lediglich ein von diesen fortführendes kurzes Leitungsstück flexibel auszuführen.

Bei einer ersten Ausführungsform dieser erfindungsgemäßen Vorrichtung dient als Drehantriebseinrichtung ein mit dem oberen Ende des segmentierten Verbindungsgestänges verbundener, sich höhenvariabel an der Stützvorrichtung abstützender Kraftdrehkopf. Der Vortrieb wird bei dieser Ausführungsform durch Absenken des Kraftdrehkopfes hervorgerufen. Hat der Kraftdrehkopf seine untere Position erreicht, d.h. die Bohrung um eine Segmentlänge niedergebracht, so muß er von dem oberen Ende des Verbindungsgestänges gelöst und anschließend in seine obere Position gefahren werden. In dieser Position besteht zwischen dem der Befestigung des angetriebenen Teils des Kraftdrehkopfes dienenden Flansch und dem oberen Ende des Verbindungsgestänges eine freie Länge, die mindestens derjenigen eines Segments des Verbindungsgestänges entspricht. Es kann nun ein weiteres Segment des Verbindungsgestänges eingesetzt werden. Die Stützvorrichtung muß daher eine Höhe aufweisen, die mindestens der Länge eines Segmentes entspricht.

Bei einer weiteren Ausführungsform der erfindungsgemäßen Vorrichtung ist die Drehantriebseinrichtung als wahlweise mit der Mantelfläche des Verbindungsgestänges in Wirkverbindung - beispielsweise durch einen Klemmgriff - bringbarer, an sich konstruktiv von Verrohrungsvorrichtungen bekannter Drehantrieb ausgebildet.

Wenn dieser gemäß Anspruch 8 höhenverstellbar an der Stützvorrichtung angeordnet ist, können auch Vortriebskräfte über den Drehantrieb in das Verbindungsgestänge eingeleitet werden. Der Vortrieb kann insgesamt durch periodisches "Nachsetzen" des Drehantriebes erfolgen, indem dieser im gelösten Zustand um eine gewisse Strecke nach oben verlagert, anschließend wiederum an der Mantelfläche des Verbindungsgestänges festgelegt und erneut abgesenkt wird. Da der Drehantrieb an nahezu jeder beliebigen Stelle bezogen auf die Länge des Verbindungsgestänges festgelegt werden kann, ist es nicht mehr erforderlich, daß der Hub, um den der Drehantrieb in Richtung der Längsachse des Gestänges verlagert werden kann, mindestens der Länge eines Segments desselben entspricht, so daß die Antriebsvorrichtung im Vergleich zu bisher bekannten erheblich niedriger bauen kann.

Der Höhenverstellung dient vorzugsweise ein längenverstellbarer Krafterzeuger, der als hydraulisch betätigbare Kolben-/Zylindereinheit ausgebildet ist (Ansprüche 9 und 10).

Weitere Ausgestaltungen der Erfindung werden aus der nachfolgenden Beschreibung unter Bezugnahme auf die Zeichnungen ersichtlich.

In der Zeichnung zeigen:
Fig. 1 perspektivisch einen außerhalb des Erdlochs angeordneten Antriebsaufbau einer ersten Ausführungsform einer erfindungsgemäßen Vorrichtung;
Fig. 2 schematisch die Wirkungsweise des Lufthebesystems bei der erfindungsgemäßen Vorrichtung;
Fig. 3 eine Seitenansicht eines Werkzugkopfes mit mehreren Bohrhämmern;
Fig. 4 eine Ansicht gemäß Fig. 3 von unten;
Fig. 5 und 6 zwei weitere Ausführungsformen der erfindungsgemäßen Vorrichtung in einer Fig. 1 entsprechenden Ansicht sowie
Fig. 7 einen Oszillationsantrieb, wie er in der Ausführung gemäß Fig. 6 Verwendung finden kann.

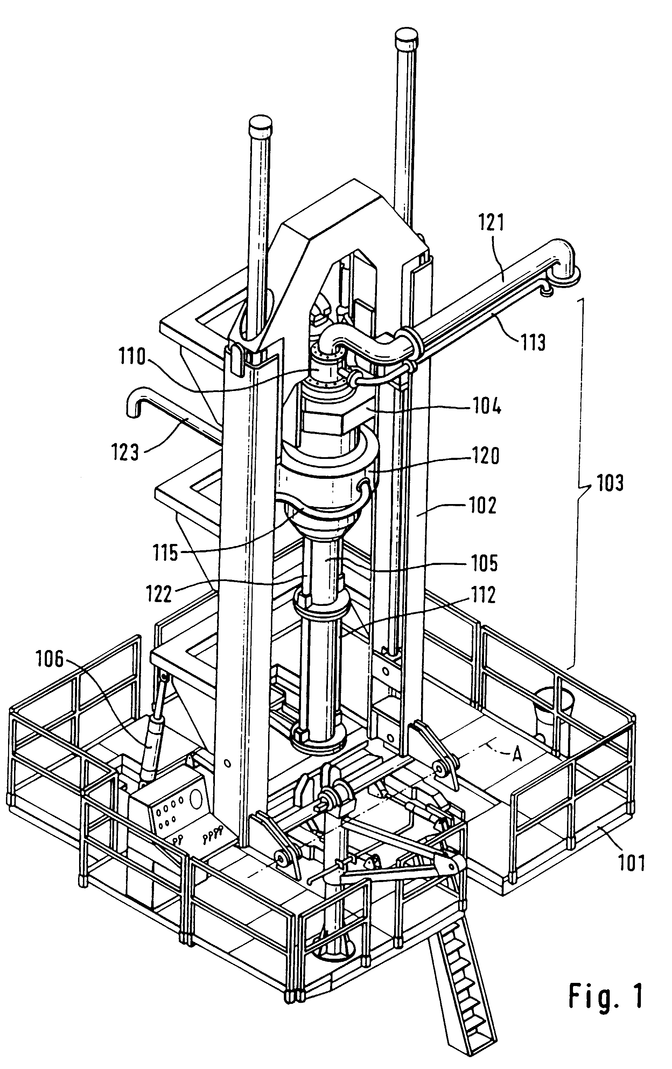

Fig. 1 zeigt den außerhalb eines herzustellenden Erdlochs angeordneten Teil einer erfindungsgemäßen Vorrichtung der ersten Ausführungsform. Der insgesamt mit 3 bezeichnete Antriebsaufbau der Vorrichtung ist an einer Stützvorrichtung 2 befestigt, die auf einer insgesamt mit 1 bezeichneten Arbeitsplattform abgestützt ist. An einem miteinander verbindbare Segmente aufweisenden Verbindungsgestänge 5, von dem nur der obere Teil gezeigt ist und das sich (nur gestrichelt angedeutet) durch die Arbeitsplattform 1 hindurch in das herzustellende Erdloch hinein und bis zum Werkzeugkopf erstreckt, greift ein schematisch gezeigter Drehantriebskopf 4 an. Der Antrieb des Verbindungsgestänges 5 mit dem Drehantriebskopf 4 kann auf herkömmliche, aus dem Stand der Technik bekannte Art und Weise erfolgen, beispielsweise über einen Hydraulikmotor.

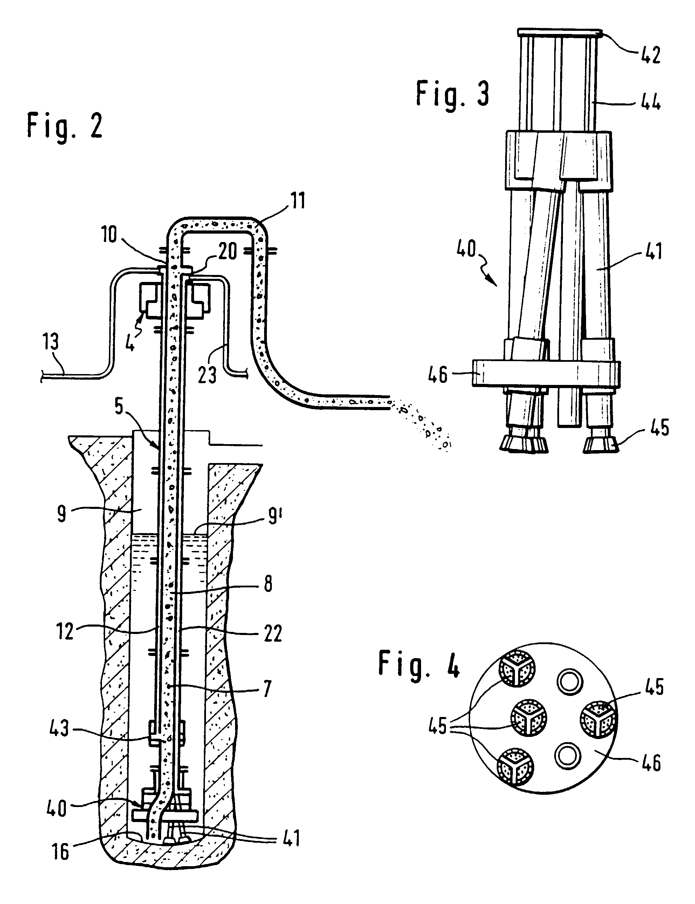

Fig. 2 erläutert schematisch das Verfahren, mit dem mit den Hämmern 41 des Werkzeugkopfs 40 gelöste Erdbrocken von der Sohle 16 des teilweise mit Wasser beispielsweise bis zu einem Spiegel 9' gefüllten Erdlochs 9 nach außen befördert werden. Der Innenraum des Verbindungsgestänges 5 bildet ein Spülrohr 8, das normalerweise mit Wasser gefüllt ist, in das oberhalb des Werkzeugkopfes 40 durch eine Einlaßklappe 43 Luft eingeblasen wird, die außerhalb der Bohrvorrichtung mit einem nicht gezeigten Kompressor verdichtet wurde und über eine erste Zuleitung 13 und den ersten Drehanschlußkopf 10 mittels einer ersten Zuführung 12 entlang des Verbindungsgestänges 5 nach unten geführt wird. Die eingeblasene Luft bewirkt durch den Dichteunterschied zwischen der mit Luftblasen durchsetzten Flüssigkeit in dem Spülrohr 8 und der äußeren Flüssigkeit in dem Erdloch 9 eine Aufwärtsströmung innerhalb des Spülrohres 8, mit der die Erdbrocken 7 nach oben transportiert und über das Auslaufrohr 11 aus der Vorrichtung herausgespült werden. Über eine zweite Zuleitung 23 wird im einteilig mit dem ersten Anschlußkopf gezeigten zweiten Anschlußkopf 20 der zweiten Zuführung 22 das Arbeitsmedium zugeführt und über diese entlang des Verbindungsgestänges 5 zum Antrieb der Hämmer 41 des Werkzeugkopfs 40 nach unten geführt.

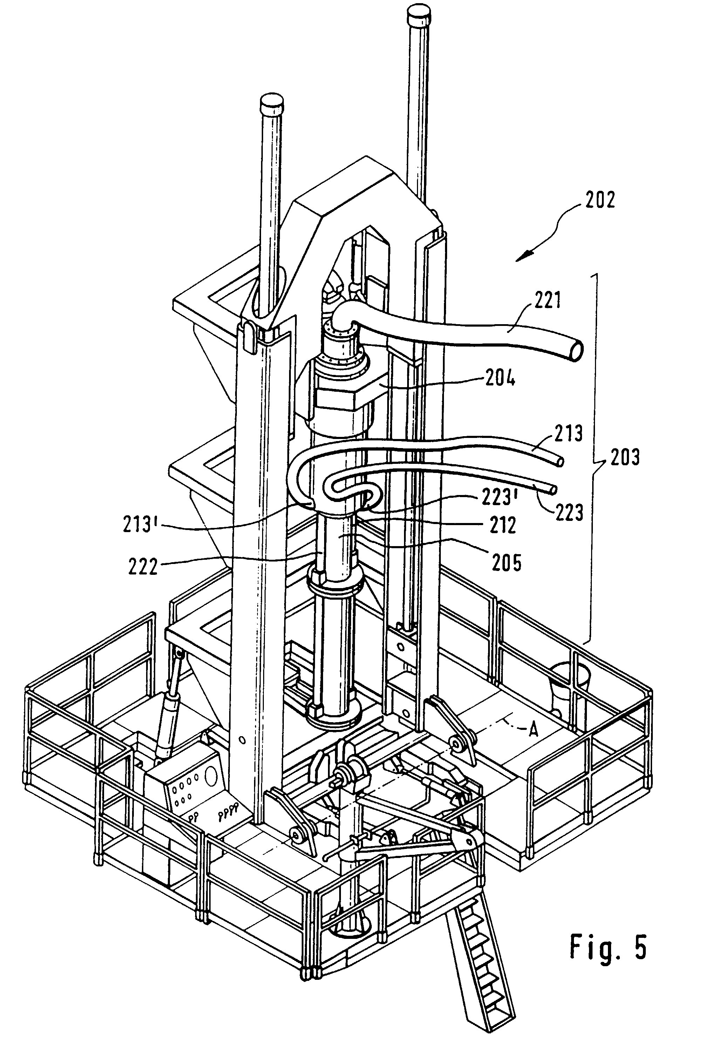

In den Fig. 3 und 4 ist ein Werkzeugkopf 40 gezeigt, der beispielsweise für den Antrieb mit Wasser als Arbeitsmedium vorgesehen ist. Die durch das Arbeitsmedium angetriebenen Hämmer 41 sind über Stützen 44 mit einer Montageplatte 42 verbunden, die am unteren Ende des Verbindungsgestänges 5 angebracht wird. Die an den Hämmern 41 angeordneten Werkzeuge 45 wirken nach unten auf die Sohle 10 des Erdlochs 9 (Fig. 2) und zertrümmern dort das Gestein. Die jeweilige Angriffsstelle bewegt sich durch die Drehung des Werkzeugkopfes 40 in Umfangsrichtung fort. Durch die Anbringung der Werkzeuge 45 auf unterschiedlichen Radien kann der gesamte Bohrlochquerschnitt überstrichen werden. Zahl und Anordnung der Werkzeuge 45 können an den Durchmesser des Erdlochs 9 und das abzutragende Material angepaßt werden. Die Hämmer 41 sind an ihren unteren Enden an einer kreisscheibenförmigen Führungsplatte 46 von einem dem Erdlochdurchmesser entsprechenden Durchmesser gehalten und geführt.

Wie ferner aus Fig. 1 ersichtlich, ist am oberen Ende des Verbindungsgestänges 5 ein mit 10 bezeichneter erster Anschlußkopf angeordnet, über den das am Grund des Erdlochs gelöste Material über das Auslaufrohr 21 nach außen abgeführt und eine Spülflüssigkeit, meist Luft, mittels einer ersten Zuleitung 13 in das Verbindungsgestänge 5 eingeleitet wird. Unterhalb des ersten Anschlußkopfes 10 ist ein zweiter, insgesamt mit 20 bezeichneter Anschlußkopf angeordnet. Die Stützvorrichtung 2 ist mittels Schwenkantrieben 6 um eine horizontale Achse A neigbar, so daß auch abweichend von der Vertikalen Erdlöcher gebohrt werden können.

Bei dieser Ausführungsform der Erfindung kann sich der zweite Anschlußkopf 20 als Ganzes mit dem verbindungsgestänge 5 mitdrehen, und nur der erste Drehanschlußkopf 10 ist feststehend montiert. Der Drehantriebskopf 4 ist so ausgeführt, daß er das Verbindungsgestänge 5 mitsamt dem zweiten Anschlußkopf 20 für das Antriebsmedium der Hämmer im Werkzeug um einen vorbestimmten Winkel um die Rotationsachse des Gestänges 5 oszillierend hin und her dreht. Dieser überstrichene Winkel liegt in der Regel unterhalb 360° und ist abhängig von der Anzahl und der Lage der auf gleichem Radius liegenden Hämmer 41 (Fig. 3 und 4) gewählt. Bei nur einem Hammer 41 pro Radius werden 360° benötigt, bei zwei um 180° zueinander versetzten Hämmern pro Radius reicht eine Hin- und Herdrehung von 180°. Es liegt aber ebenfalls im Rahmen der Erfindung, den Werkzeugkopf um einen begrenzten, jedoch größeren Winkel als 360° hin- und herzudrehen.

Durch den begrenzten Drehwinkel ist es möglich, mit einer fest installierten, den Drehwinkel mitmachenden Zuleitung für das Antriebsmedium zu arbeiten, ohne daß es einer Drehdichtung bedarf. In dem gezeigten Ausführungsbeispiel wird das Antriebsmedium mittels eines flexiblen Schlauches 15 in die zweite Zuführung 22 des Verbindungsgestänges 5 eingeleitet. Der Schlauch 15 ist zwischen der zweiten Zuleitung 23 und der zweiten Zuführung 22 montiert. Die Länge des Schlauches 15 wird so gewählt, daß der Schlauch 15 der Drehung des Verbindungsgestänges 5 folgen kann, ohne diese zu behindern.

Bei einer weiteren, in Fig. 5 dargestellten Ausführungsform, bei der einander funktionell entsprechende Teile um gegenüber Fig. 1 mit 200 erhöhte Bezugszeichen versehen sind, sind die Zuleitung 223 für das Arbeitsmedium, die Zuleitung 213 für die Durchluft sowie das Auslaufrohr 221 als flexible Schläuche ausgebildet. Die beiden Zuleitungen 213 und 223 sind unterhalb des Drehantriebs 204 an den Stellen 213', 223' über nicht im einzelnen dargestellte Flanschanordnungen mit den am Verbindungsgestänge 205 verlaufende Leitungen 212, 222 verbunden, durch die die Druckluft der Einlaßöffnung (43 in Fig. 2) bzw. das Arbeitsmedium dem Werkzeugkopf (40 in Fig. 2) zugeführt wird. Der Vorteil dieser Ausführungsform besteht darin, daß der Drehantriebskopf 204, der allerdings in diesem Fall nur eine Oszillationsbewegung bewirkt, lediglich eine Drehlagerung für das Verbindungsgestänge 205 umfassen muß, auf Drehdurchführungen und Drehdichtungen jedoch gänzlich verzichtet werden kann.

Es sei in diesem Zusammenhang darauf hingewiesen, daß es nicht zwingend notwendig ist, die flexiblen Schläuche 213, 223 an den Stellen 213' und 223' mit den Leitungen 212, 222 zu verbinden. Vielmehr liegt es ebenfalls im Rahmen der Erfindung, gänzlich auf die starren Leitungen 212, 222 zu verzichten und die Schläuche 213, 223 bis zu den entsprechenden, in der Bohrung liegenden Anschlußstellen an dem Verbindungsgestänge bzw. an dem Werkzeugkopf zu führen.

Anstatt des stets am oberen Ende des oberen Segments des Verbindungsgestänges 205 angreifenden Drehantriebskopfes 204 ist es auch bei dieser Ausführungsform möglich, einen Drehantrieb 4' vorzusehen, der außen an dem Verbindungsgestänge 205 angreift und dessen Wirkungsweise und Funktion auch ansonsten derjenigen des Drehantriebs 4' entspricht, jedoch lediglich eine hin- und hergehende Bewegung des Verbindungsgestänges bewirkt.

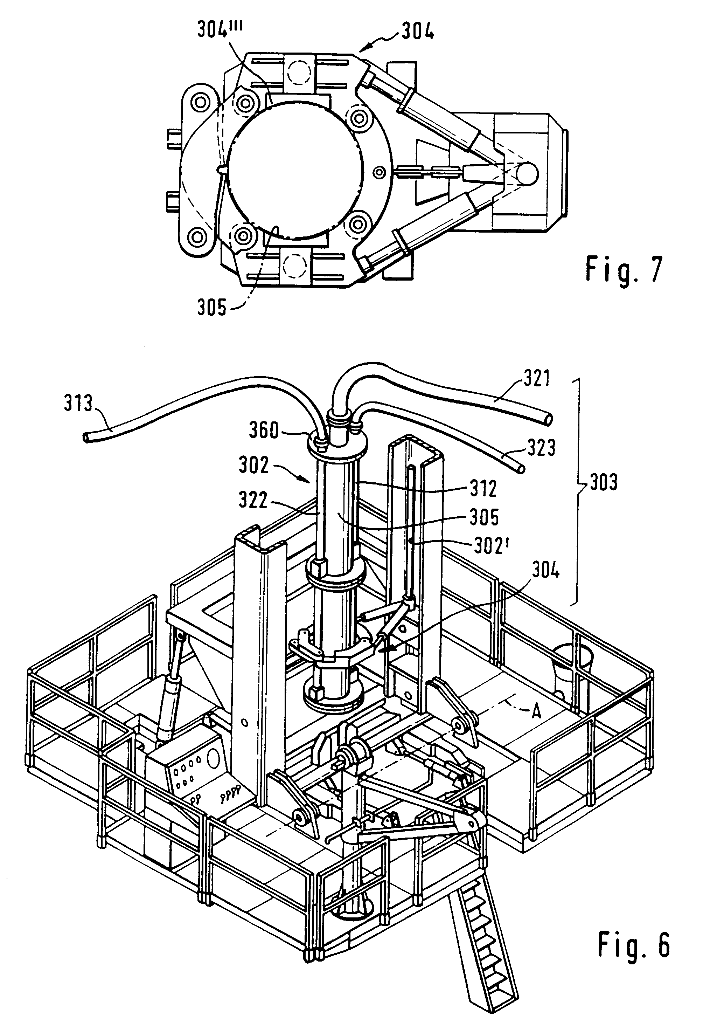

Der in Fig. 7 dargestellte Drehantrieb 304', der an sich von Verrohrungsmaschinen bekannt ist und daher nicht mehr im Einzelnen beschrieben werden soll, umfaßt einen mit Hilfe von zwei Kolben/Zylindereinheiten in eine Oszillationsbewegung versetzbaren Teil 304 ''', der über seinen Umfang mehrteilig aufklappbar ausgestaltet ist. Zur Ankopplung an das Verbindungsgestänge 305 wird der auf dieses aufgeschobene Teil 304''' geschlossen, so daß er sich mit der Mantelfläche des Verbindungsgestänges 205 in Wirkrichtung befindet.

Eine weitere Ausführungsform der erfindungsgemäßen Vorrichtung ist in Fig. 6 dargestellt. Einander funktionell entsprechende Teile sind im Hinblick auf die Ausführungsform in Fig. 1 mit um 300 erhöhte Bezugszeichen versehen. Bei dieser wurde auf eine obere Lagerung im Rahmen des Drehantriebs 204 in Fig. 5 oder eines Drehanschlußkopfes vollständig verzichtet. Dem Oszillationsantrieb dient eine Antriebseinheit 304, die in ihrer Funktion derjenigen in Fig. 11 dargestellten und oben beschriebenen entspricht.

Die Verbindung der Schlauchleitungen 313,323 mit den Zuführungen 312,322 bzw. der Schlauchleitung 321 mit dem Inneren des Verbindungsgestänges 305 erfolgt mit Hilfe eines am oberen Ende des oberen Segments des Verbindungsträgers angeordneten Flanschkopfes 360, der derart ausgebildet ist, daß an diesem vorgesehene Anschlüsse für die Schlauchleitungen 313,323,321 mit den Leitungen 312,322 bzw. dem Inneren des Verbindungsgestänges kommunizieren.

Die Antriebseinheit 304 ist an der Stützeinheit 302 über längenverstellbare Krafterzeuger 302' gelagert, so daß über die Antriebseinheit 304 auch die Vortriebskraft durch ein Absenken der Antriebseinheit 304 in das Verbindungsgestänge einleitbar ist. Hat die Antriebseinheit 304 ihre untere Position erreicht, so kann ein weiterer Vortrieb durch "Nachfassen" bewirkt werden, indem sie gelöst und wieder festgelegt wird, nachdem sie in eine höhere Position mit Hilfe der Krafterzeuger verlagert wurde und der Vorgang erneut beginnt. Da bei dieser Vorrichtung keine Stützeinheit erforderlich ist, deren Länge zumindest derjenigen eines Segments des Verbindungsgestänges 5 entspricht, zeichnet sich diese Ausführungsform durch eine besonders geringe Bauhöhe aus.

## Patentansprüche

1. Vorrichtung zur Herstellung eines Erdlochs,
mit einem oberhalb des herzustellenden Erdlochs anzuordnenden Antriebsaufbaus (103,203,303) mit einer Drehantriebseinrichtung (104,204,304), die das Verbindungsgestänge (105,205,305) drehrichtungsalternierend um einen begrenzten Drehwinkel antreibt,
mit einem hohlen Verbindungsgestänge (105,205,305), an dem die Drehantriebseinrichtung (104, 204, 304) angreift und welches in das Erdloch absenkbar ist, wobei durch das Innere des Verbindungsgestänges und über eine an seinem oberen Ende angeschlossene Auslaufleitung Abraum aus der Bohrung förderbar ist,
mit einer ersten Zuführung (112,212,312) zum Einleiten eines Spülmediums, die sich bis zu einer Einlaßöffnung (43) zum Innern des Verbindungsgestänges erstreckt und mit diesem kommuniziert,
und mit einer zweiten Zuführung (122,222,322), durch die einem am unteren Ende des Verbindungsgestänges (105,2-05,305) angeordneten Werkzeugkopf (40) ein unter Druck stehendes, am Werkzeugkopf vorgesehene Abtragswerkzeuge antreibendes fluides Arbeitsmedium zuführbar ist,
**dadurch gekennzeichnet,**
daß die zweite Zuführung (122,222,322) einen flexiblen Bereich aufweist, der unter Ermöglichung der drehrichtungsalternierenden Bewegung eine Verbindung der zweiten Zuführung mit einer Vorrichtung zur Beaufschlagung mit dem unter Druck stehenden Arbeitsmedium ermöglicht.

2. Vorrichtung nach Anspruch 1,
**dadurch gekennzeichnet,** daß die erste Zuführung (112,212,312) einen flexiblen Bereich aufweist, der unter Ermöglichung der drehrichtungsalternierenden Bewegung eine Verbindung zu einer Vorrichtung zur Beaufschlagung mit dem Spülmedium ermöglicht.

3. Vorrichtung nach Anspruch 1 oder 2,
**dadurch gekennzeichnet,** daß die Auslaufleitung einen flexiblen Bereich aufweist, der unter Ermöglichung der drehrichtungsalternierenden Bewegung den Austrag des Abraumes ermöglicht.

4. Vorrichtung nach einem der Ansprüche 1 bis 3,
**dadurch gekennzeichnet**, daß eine oder beide Zuleitungen (112,212,312;122,222,322) als flexible Schlauchleitungen ausgebildet sind.

5. Vorrichtung nach einem der Ansprüche 1 bis 3,
**dadurch gekennzeichnet,** daß die Leitungen (112,212, 312;122,222,322) im Bereich des Verbindungsgestänges (105,205,305) starr ausgebildet und an diesem festgelegt sind.

6. Vorrichtung nach einem der Ansprüche 1 bis 5,
**dadurch gekennzeichnet,** daß als Drehantriebseinrichtung ein am oberen Ende des Verbindungsgestänges (105,205,305) angeordneter, sich höhenvariabel an der Stützvorrichtung (102,202) abstützender Kraftdrehkopf dient.

7. Vorrichtung nach einem der Ansprüche 1 bis 5,
**dadurch gekennzeichnet,** daß als Drehantriebseinrichtung ein wahlweise mit dem Verbindungsgestänge (105,205, 305) in Wirkverbindung bringbarer, an sich konstruktiv von Verrohrungsvorrichtungen bekannter Drehantrieb (304) vorgesehen ist.

8. Vorrichtung nach Anspruch 7,
**dadurch gekennzeichnet,** daß der Drehantrieb (304) höhenverstellbar an der Stützvorrichtung (302) angeordnet ist.

9. Vorrichtung nach Anspruch 18,
**dadurch gekennzeichnet,** daß der Höhenverstellung längenverstellbare Krafterzeuger dienen.

10. Vorrichtung nach Anspruch 9,
**dadurch gekennzeichnet,** daß die längenverstellbaren Krafterzeuger als hydraulisch betätigbare Kolben/Zylindereinheiten ausgebildet sind.

## Claims

1. Device for drilling a bore hole in the ground,
with a driving structure (103,203, 303) for mounting over the hole to be drilled, with a rotary driving device (104, 204, 304) which drives the connecting rod (105, 205, 305) in alternating directions of rotation through a limited angle,
with a hollow connecting rod (105, 205, 305) which is engaged by the rotary driving device (104, 204, 304) and which can be lowered into the bore hole, waste material from the hole being delivered through the interior of the connecting rod and through an outlet pipe connected to its upper end,
with a first supply (112, 212, 312) for introducing a flushing medium which extends to an inlet opening (43) to the interior of the connecting rod and communicates with it,
with a second supply (122, 222, 322), through which a fluid working medium which is under pressure and drives the cutting tools provided on the tool head is fed to a tool head (40) mounted on the bottom end of the connecting rod (105, 205, 305),
**characterised in that**
the second supply (122, 222, 322) has a flexible portion which, whilst allowing the alternating rotary movement, makes possible a connection of the second supply to a device for being acted on by the working medium under pressure.

2. Device according to Claim 1,
**characterised in that** the first supply (112, 212, 312) has a flexible region which, whilst allowing the alternating rotary movement, makes possible a connection to a device for being acted on with the flushing medium.

3. Device according to Claim 1 or 2,
**characterised in that** the outlet pipe has a flexible region which, while allowing the alternating rotary movement, makes possible the removal of the waste material.

4. Device according to one of Claims 1 to 3,
**characterised in that** one or both feed pipes (112, 212, 312; 122, 222, 322) is or are in the form of a flexible hose connection.

5. Device according to one of Claims 1 to 3,
**characterised in that** the pipes (112, 212, 312; 122, 222, 322) are made rigid in the region of the connecting rod (105, 205, 305) and rigidly connected to it.

6. Device according to one of Claims 1 to 5,
**characterised in that** a force rotary head arranged at the upper end of the connecting rod (105, 205, 305) and resting on the supporting device (102, 202) in a manner allowing variation in height serves at the rotary driving device.

7. Device according to one of Claims 1 to 5,
**characterised in that** a rotary drive (304) known in itself in its construction from casing devices and capable of being brought at will into an operative connection with the connecting rod (105, 205, 305) is provided as the rotary driving device.

8. Device according to Claim 7,
**characterised in that** the rotary drive (304) is mounted on the supporting device (302) in a manner allowing adjustment in height.

9. Device according to Claim 18,
**characterised in that** force generators of variable length serve for the adjustment of height.

10. Device according to Claim 9,
**characterised in that** the force generators of variable length are in the form of hydraulically actuated piston/cylinder units.

## Revendications

1. Dispositif de forage d'un trou de sonde,
• avec une superstructure d'entraînement (103, 203, 303) à disposer au-dessus du trou de sonde à forer, avec un dispositif d'entraînement en rotation (104, 204, 304), qui entraîne la tringlerie de liaison (105, 205, 305), avec une alternance du sens de rotation autour d'un angle de rotation limité,
• avec une tringlerie de liaison creuse (105, 205, 305) à laquelle se raccorde le dispositif d'entraînement en rotation (104, 204, 304) et qui est susceptible de descendre dans le trou de forage, les déblais étant susceptibles d'être véhiculés hors du forage, en passant par l'intérieur de la tringlerie de liaison et par une conduite d'évacuation raccordée à son extrémité supérieure,
• avec une première conduite d'amenée (112, 212, 312), pour l'introduction d'un milieu de balayage, qui s'étend jusqu'à son ouverture d'entrée (43) à l'intérieur de la tringlerie de liaison et communique avec celle-ci, et
• avec une deuxième conduite d'amenée (122, 222, 322), à travers laquelle un milieu de travail fluide, sous pression, entraînant des outils de déblaiement montés sur une tête porte-outils (40), est susceptible d'être amené à la tête porte-outils disposée à l'extrémité inférieure de la tringlerie de liaison (105, 205, 305),
caractérisé en ce que
la deuxième conduite d'amenée (122, 222, 322) présente une zone flexible qui, en permettant le déplacement avec alternance du sens de rotation, permet d'établir une liaison de la deuxième conduite d'amenée à un dispositif d'alimentation avec le fluide de travail sous pression.

2. Dispositif selon la revendication 1,
caractérisé en ce que
la première conduite d'amenée (112, 212, 312) présente une zone flexible qui, en permettant le déplacement en alternance de sens de rotation, permet d'établir une liaison à un dispositif d'alimentation par le milieu de balayage.

3. Dispositif selon la revendication 1 ou 2,
caractérisé en ce que
la conduite d'évacuation présente une zone flexible qui, en permettant le déplacement en alternance du sens de rotation, permet l'expulsion des déblais.

4. Dispositif selon l'une des revendications 1 à 3,
caractérisé en ce qu'
une ou deux conduites d'amenée (112, 212, 312 ; 122, 222, 322) sont réalisées sous la forme de tuyaux flexibles.

5. Dispositif selon l'une des revendications 1 à 3,
caractérisé en ce que
les conduites (112, 212, 312 ; 122, 222, 322) sont réalisées en étant rigides dans la zone de la tringlerie de liaison (105, 205, 305) et sont fixées sur celle-ci.

6. Dispositif selon l'une des revendications 1 à 5,
caractérisé en ce que
comme dispositif d'entraînement en rotation, on utilise une tête en rotation motrice, disposée à l'extrémité supérieure de la tringlerie de liaison (105, 205, 305), prenant appui, de façon variable en hauteur, sur le dispositif d'appui (102, 202).

7. Dispositif selon l'une des revendications 1 à 5,
caractérisé en ce que
comme dispositif d'entraînement en rotation, on prévoit un entraînement en rotation (304) connu en soi, quant à sa construction, dans les dispositifs de tubage, susceptible d'être relié fonctionnellement à volonté à la tringlerie de liaison (105, 205, 305).

8. Dispositif selon la revendication 7,
caractérisé en ce que
l'entraînement en rotation (304) est disposé de façon réglable en hauteur sur le dispositif d'appui (302).

9. Dispositif selon la revendication 8,
caractérisé en ce que
des générateurs de force, réglables en longueur, servent à effectuer le réglage en hauteur.

10. Dispositif selon la revendication 9,
caractérisé en ce que
les générateurs de force réglables en longueur sont réalisés sous la forme d'unités à piston/cylindre, actionnables de façon hydraulique.
